# EUROPEAN PATENT APPLICATION

(11) **EP 4 819 102 A1**
(43) Date of publication of application: **07.10.2026**
(21) Application number: 26156729.1
(22) Date of filing: 05.02.2026
(51) Int. Cl.: G08G 5/21, G08G 5/22, G08G 5/26, G08G 5/34, G08G 5/53, G08G 5/55, G08G 5/57, G08G 5/72, G08G 5/74, G08G 5/76, G08G 5/80

(54) **MISSION MANAGEMENT SYSTEM ARCHITECTURE**

(30) Priority: 01.04.2025 US 202519097025
(71) Applicant: The Boeing Company, Arlington, VA 22202 (US)
(72) Inventor: SAUNDERS, Jeffery, Arlington, 22202 (US); BEUTLER, Arthur D., Arlington, 22202 (US)
(74) Representative: Boult Wade Tennant LLP

(57) **Abstract**

A mission management system (MMS) of a robot includes a plurality of mission management system computers (MMSCs). Each MMSC includes a plurality of processors. Each processor includes a conflict detection and resolution module that is configured to identify conflicts associated with the robot and to determine conflict resolutions, a communication module that is configured to communicate with a supervisor system not included in the robot, and a flight plan management (FPM) module. The FPM module includes a mission update module and a behavior management module. The mission update module is configured to generate a nominal trajectory and one or more contingency trajectories for the robot. The behavior management module is configured to control a behavior of the robot.

## Description

### FIELD

The present disclosure relates generally to a robot and to a mission management system of the robot.

### BACKGROUND

Many modern robots and other machines are designed to operate with increased autonomy, reducing reliance on trained operators for safe and effective operation. These robots include both manned and unmanned platforms, such as unmanned ground vehicles (UGVs), unmanned aerial vehicles (UAVs), unmanned surface vehicles (USVs), unmanned underwater vehicles (UUVs), and unmanned spacecraft. The use of unmanned vehicles has expanded significantly in recent years across both military and civilian applications, driving the need for more advanced autonomy and decision-making capabilities.

### SUMMARY

There is described herein an MMS of a robot, comprising: a plurality of MMSCs, wherein each MMSC includes: a plurality of processors, wherein each processor includes: a conflict detection and resolution module that is configured to identify conflicts associated with the robot and to determine conflict resolutions; a communication module that is configured to communicate with a supervisor system not included in the robot; and an FPM module that includes a mission update module and a behavior management module, wherein: the mission update module is configured to generate a nominal trajectory and one or more contingency trajectories for the robot; and the behavior management module is configured to control a behavior of the robot.

There is described herein an MMSC of an MMS of a robot, comprising: a plurality of processors, wherein each processor includes: a conflict detection and resolution module that is configured to identify conflicts associated with the robot and to determine conflict resolutions; and an FPM module that includes a mission update module and a behavior management module, wherein: the mission update module is configured to generate a nominal trajectory and one or more contingency trajectories for the robot; and the behavior management module is configured to control a behavior of the robot.

There is described herein a method, comprising: generating, by an MMS of a robot, a nominal trajectory and one or more contingency trajectories for the robot; and sending, by the MMS, the nominal trajectory and the one or more contingency trajectories to a robot management system of the robot.

The features, functions, and advantages described herein can be achieved independently in various implementations or can be combined in other implementations, further details of which are shown in the drawings and described below.

### BRIEF DESCRIPTION OF THE DRAWINGS

Fig. 1 is a diagram of an example implementation associated with a mission management system architecture.
Figs. 2A-2B are diagrams of an example implementation associated with a mission management system architecture.
Figs. 3A-3B are diagrams of an example implementation associated with a mission management system architecture.
Figs. 4A-4B are diagrams of an example implementation associated with a mission management system architecture.
Figs. 5A-5B are diagrams of an example implementation associated with a mission management system architecture.
Fig. 6 is a diagram of example components of a device associated with a mission management system architecture.

### DETAILED DESCRIPTION

The following detailed description of example implementations refers to the accompanying drawings. The same reference numbers in different drawings identify the same or similar elements.

One key area of focus in robotics is improving autonomous performance, which involves managing multiple aspects of robot operations. These aspects include real-time flight control, sensor fusion for situational awareness, automated task allocation, and mission optimization. Additionally, autonomous data processing and decision-making are critical for efficient trajectory generation, mission execution, and robot responsiveness. However, as autonomy becomes more advanced, an underlying autonomy system to manage and control the robot become increasingly complex, leading to significant robot performance trade-offs.

Many existing autonomy systems are designed for integration with a specific robotic platform, relying on particular hardware components and being optimized for a predefined set of missions. However, this rigid design limits scalability and adaptability, making it challenging to modify the robot's hardware or expand its mission capabilities without extensive system reconfiguration. As a result, even minor hardware upgrades or mission adjustments can require significant software and integration updates, restricting the robot's overall functionality. Additionally, such constraints can negatively impact the implementation of critical components, particularly those with high availability or high integrity requirements, increasing the risk of system failures or operational inefficiencies. A more flexible autonomy framework is essential to support evolving mission demands and hardware advancements while ensuring reliability and performance.

Some implementations described herein include a mission management system (MMS) of a robot. The MMS is configured to generate and provide trajectories and maneuvers to a robot management system (RMS) of the robot for execution (e.g., to control an operation of the robot). The MMS includes a plurality of mission management system computers (MMSCs), wherein each MMSC includes a plurality of processors. Each processor includes a conflict detection and resolution module that is configured to identify conflicts associated with the robot (e.g., based on alert information provided by one or more hardware components of the robot that are connected to the MMS) and to determine conflict resolutions, a communication module that is configured to communicate with a supervisor system not included in the robot, and a flight plan management (FPM) module. The FPM includes a mission update module that is configured to generate a nominal trajectory and one or more contingency trajectories for the robot and a behavior management module that is configured to control a behavior of the robot.

The architecture of the MMS enables all decision-making information to be provided to the behavior management module, which determines which trajectories, maneuvers, or other behavior control information is to be provided to the RMS. This enables the RMS to be reactive to information provided by the behavior management module of the MMS, to control the robot (e.g., to control operations of the robot). Because of a hierarchical structure of the MMS architecture, only necessary information is provided to the RMS, which reduces a computational workload and complexity/decision making of the RMS. This therefore enhances the robot's automated functionality and overall robustness. Further, the architecture allows for the MMS to be extended to accommodate additional modules and/or hardware, which enables seamless integration of the MMS with various robotic platforms, regardless of hardware configurations or mission objectives.

By decoupling autonomy control decisions from specific hardware components, the MMS allows for rapid upgrades and modifications without requiring extensive reconfiguration. Additionally, the MMS employs redundancy management and fault-tolerant design principles to maintain high availability and integrity, even when incorporating new or different components. This flexibility enhances scalability, mission adaptability, and operational reliability, ultimately extending the lifespan and functionality of robots with autonomous systems while reducing development and maintenance overhead.

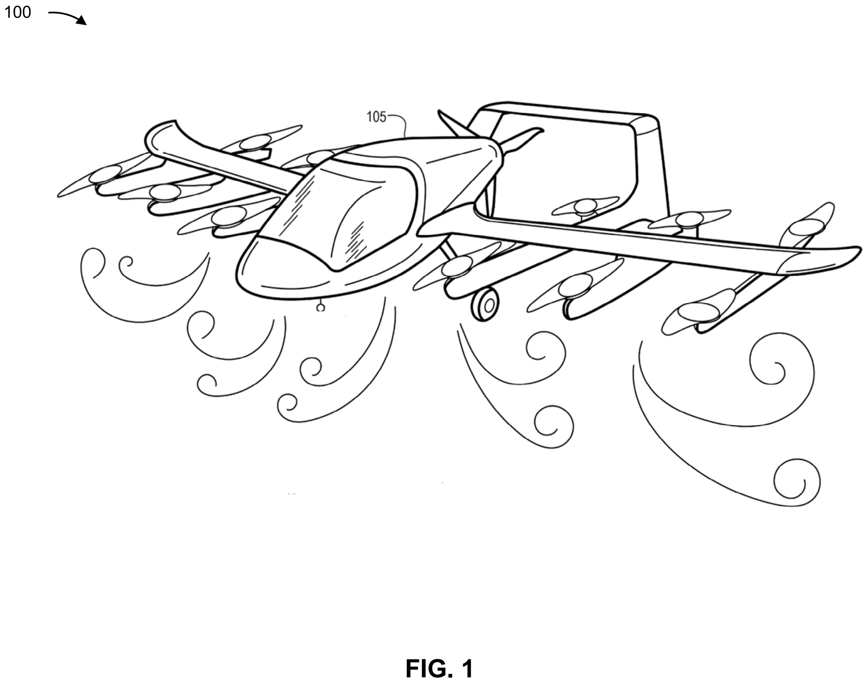

Fig. 1 is a diagram of an example implementation 100 associated with a mission management system architecture. As shown in Fig. 1, example implementation 100 includes a robot 105, which is described in more detail below and in connection with Figs. 1, 2A-2B, 3A-3B, 4A-4B, 5A-5B, and 6.

The robot 105 is a machine that is designed and configured to execute maneuvers in an environment. The robot 105 may be manned or unmanned. The robot 105 may be fully human-controlled, or the robot 105 may be semi-autonomous or autonomous, in which case at least some of the maneuvers are executed independently of or with minimal human intervention. In some examples, the robot 105 is operable in various modes with various amounts of human control.

The robot 105 may be, or may include, an aerobot, an android, an automaton, an autonomous vehicle, an explosive ordnance disposal robot, a hexapod, an industrial robot, an insect robot, a microbot, a nanobot, a military robot, a mobile robot, a rover, a service robot, a surgical robot, a walking robot, or another type of robot. Other examples include a variety of unmanned vehicles, including UGVs, UAVs, USVs, UUVs, or unmanned spacecraft. These vehicles may include autonomous cars, planes, trains, industrial vehicles, fulfillment center robots, supply-chain robots, robotic vehicles, or mine sweepers, along with other examples.

As shown in Fig. 1, the robot 105 (shown as an electric vertical takeoff and landing (eVTOL) aircraft) may be designed and configured to fly, and therefore may be referred to as an aerial robot. The robot 105 may be configured to fly in different environments, including an urban environment (and the robot 105 therefore may be associated with urban air mobility (UAM)). The robot 105 may be configured to operate with at least some level of autonomy, and therefore may be referred to as an autonomous robot, or an autonomous aerial robot in the case of an autonomous robot that is also designed and configured to fly. Accordingly, the robot 105 be configured to perform one or more autonomous flight operations. Examples of flight operations may include takeoff operations, in-flight operations (which may include hovering), and/or landing operations. The robot 105 may include a mission management system (e.g., the MMS 210 described herein), a robot management system (the RMS 220 described herein), and/or another system for performing one or more functions or operations associated with controlling the robot 105 (e.g., to enable performance of the one or more autonomous flight operations by the robot 105).

As indicated above, Fig. 1 is provided as an example. Other examples may differ from what is described with regard to Fig. 1.

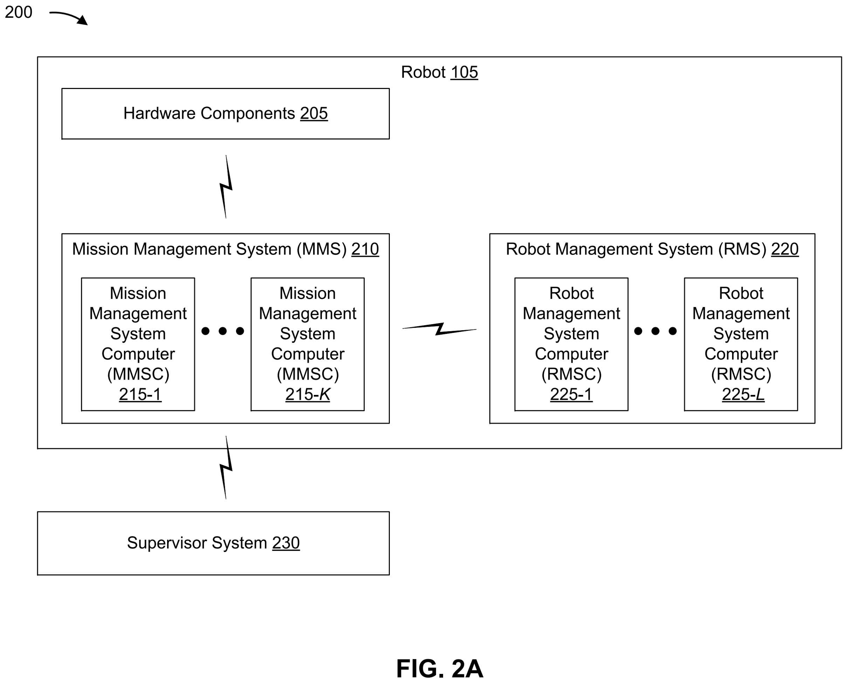

Figs. 2A-2B are diagrams of an example implementation 200 associated with a mission management system architecture. As shown in Fig. 2A, example implementation 200 includes the robot 105, which includes one or more hardware components 205, an MMS 210, which includes a plurality of MMSCs 215 (shown as MMSC-1 through MMSC-K, where K > 1), and an RMS 220, which includes a plurality of robot management system computers (RMSCs) 225 (shown as RMSC-1 through RMSC-L, where L > 1). As further shown in Fig. 2A, the robot 105 may be associated with a supervisor system 230. These systems and devices are described in more detail below and in connection with Figs. 2A-2B, 3A-3B, 4A-4B, 5A-5B, and 6.

The one or more hardware components 205 includes at least one of a radar system, a terrain awareness warning system (TAWS), a collision avoidance system (CAS) (e.g., an airborne collision avoidance system (ACAS)), a transponder, a door sensor, an ice detection sensor, a data logger, a communication component (also referred to herein as a communication module), a maintenance or diagnostic device, or a landing hazard avoidance system, along with other examples. The radar system may be configured to detect (e.g., by sending out radio waves and interpreting reflected signals) traffic (e.g., other robots and/or vehicles) in an environment in which the robot 105 operates. The TAWS may be configured to identify and provide information related to a terrain of the environment, such as to prevent a collision of the robot 105 and the terrain. The CAS may be configured to identify and provide information related to traffic in the environment, such as to prevent a collision of the robot 105 with another robot or vehicle in the environment. The transponder may be configured to communicate information (e.g., location information, trajectory information, or other information) to and from other robots or vehicles in the environment. The door sensor may be configured to detect when a door of the robot 105 is open or closed, such as to ensure that a payload is properly stowed within the robot 105 and/or to prevent mid-flight aerodynamic issues. The ice detection sensor may be configured to detect ice buildup on the robot 105 (e.g., on wings, propellers, or other components of the robot 105), such as to enable the robot 105 to take measures to reduce ice formation on the robot 105 and thereby improve an aerial performance of the robot 105. The data logger may be configured to record information related to operation of the robot 105, such as to enable a performance evaluation of the robot 105. The communication component may be configured to communicate (e.g., wirelessly communicate, such as using radio frequency (RF) components, cellular network components, satellite link components, or other types of wireless communication components) with a robot, a device, or a system, such as the supervisor system 230, that is not included in the robot 105. The maintenance or diagnostic device may be configured to diagnose issues associated with performance of the robot 105 and/or components of the robot 105, such as to ensure a reliability and longevity of the robot 105. The landing hazard avoidance system may be configured to detect and assess a landing area for the robot 105 (e.g., during a landing operation of the robot 105), such as to avoid hazards associated with the landing area that could damage the robot 105 or impede the landing operation of the robot 105. Each of the one or more hardware components 205 may connect to the MMS 210, such as to each of the MMSCs 215 of the MMS 210, via one or more connections between the one or more hardware components 205. In this way each MMSC 215 may be configured to communicatively connect to the one or more hardware components 205. While Fig. 2A shows the one or more hardware components 205 as components of the robot 105 that are separate from the MMS 210, at least some of the one or more hardware components 205 may be included in (e.g., as a part of) the MMS 210.

The MMS 210 is configured to manage missions of the robot 105. A mission is a deployment of the robot 105 to achieve one or more mission objectives. A mission may be decomposed into maneuvers of the robot 105, and the MMS 210 may perform operations to manage the robot 105 to execute the maneuvers with specific parameters and capabilities. In some implementations, the MMS 210 provides a complete, end-to-end autonomy architecture with open system architecture standards and parameterized to allow rapid extension and reapplication to a variety of robots 105. The flexibility of the MMS 210 enables an operator to code the MMS 210 once, but to apply the MMS 210 anywhere. The MMS 210 may therefore be applied to virtually any robot that applies, or benefits from, autonomy. The MMS 210 may include an adaptable autonomy architecture that is applicable to a variety of robots 105, including those identified above.

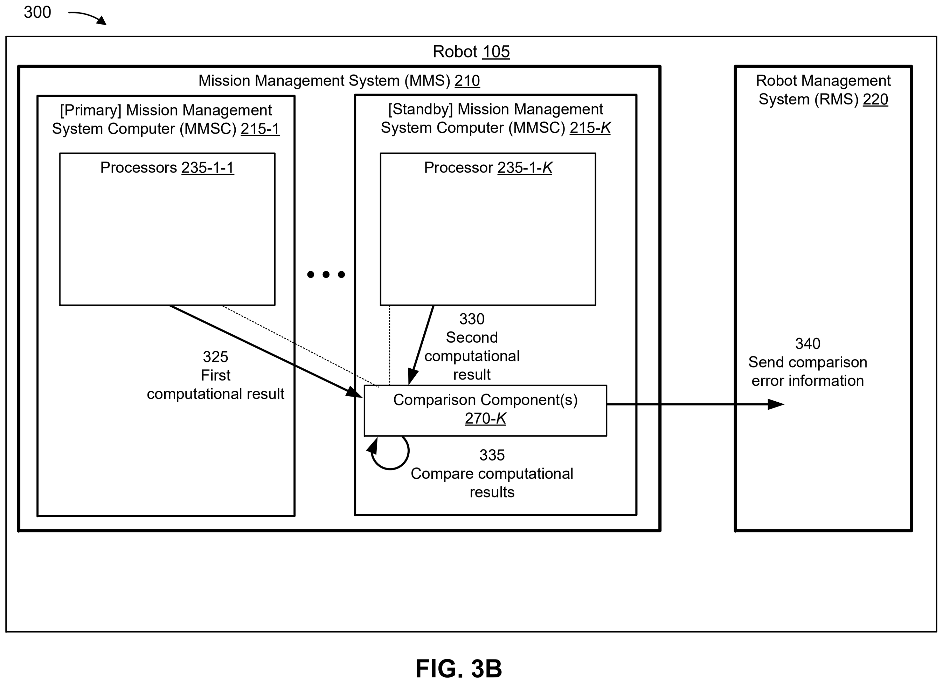

The MMS 210 includes the plurality of MMSCs 215, which are configured to process input information (e.g., obtained from the one or more hardware components 205) and send output information to the RMS 220, as further described herein. In some implementations, the plurality of MMSCs 215 includes a primary MMSC 215 and at least one standby MMSC 215 (e.g., arranged in an operational dual-duplex configuration), such as to enhance reliability, fault tolerance, and continuous operation of the MMS 210. The primary MMSC 215 and the at least one standby MMSC 215 are further described herein in relation to Fig. 3B.

The RMS 220 is configured to manage components of the robot 105, such as maneuver controls, landing gear, onboard environmental systems, electrical, pneumatic and hydraulic systems, communication systems, navigation systems, and other components for controlling operation and maneuvering of the robot 105. The RMS 220 includes the plurality of RMSCs 225 that are configured to accept information (e.g., maneuver commands) from the MMS 210, and control the robot 105 using the information, as further described herein. In the context of a vehicle, the RMS 220 can also be referred to as a vehicle management system (VMS) 220.

The supervisor system 230 is configured to monitor the robot 105. In some implementations, the supervisor system 230 is a ground control system, such as a multi-vehicle supervisor (MVS), that is configured to manage and coordinate the robot 105 (as well as one or more other robots). The supervisor system 230 may communicate information to and from the robot 105, as further described herein.

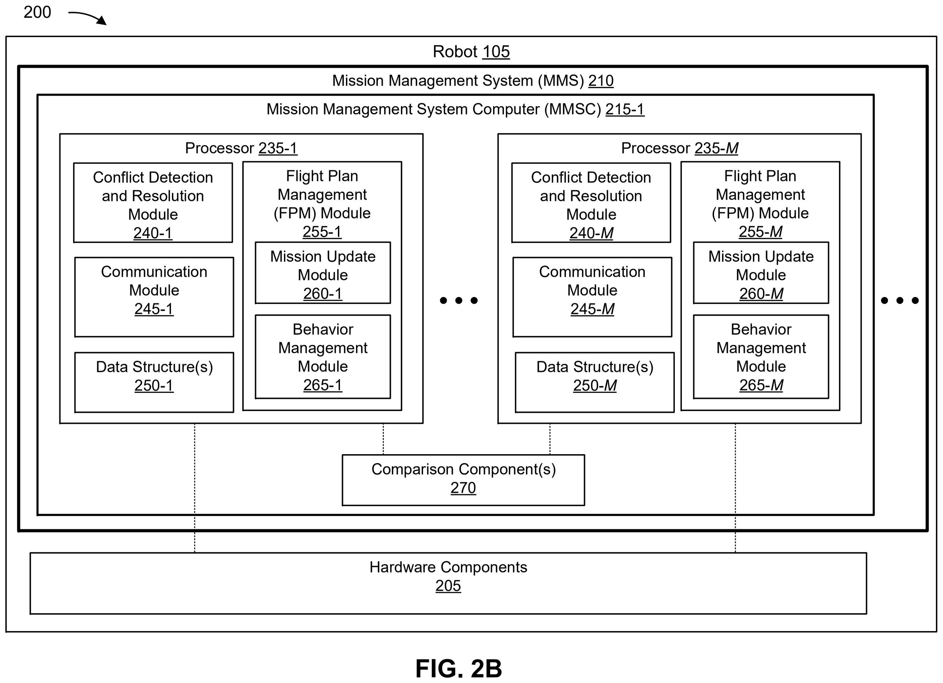

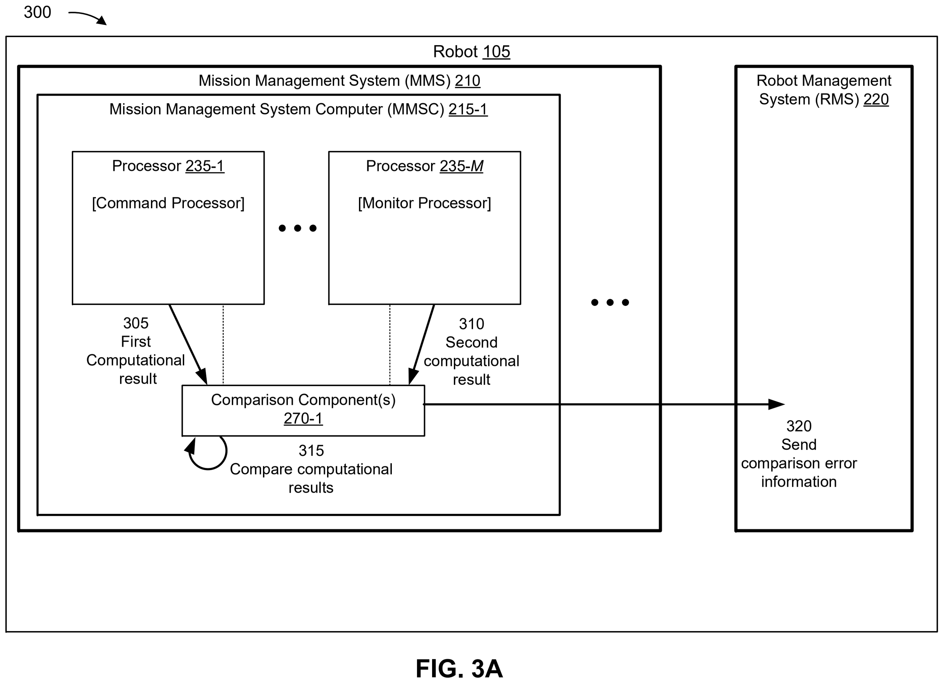

As shown in Fig. 2B, each MMSC 215 of the MMS 210 includes a plurality of processors 235 (shown as processor 235-1 through processor 235-M, where M > 1, for the MMSC 215-1). In some implementations, the plurality of processors 235 includes a command processor 235 (also referred to as a COM processor) and at least one monitor processor 235 (also referred to as at least one MON processor) (e.g., arranged in an operational dual-duplex configuration), such as to enhance reliability, fault tolerance, and continuous operation of the MMSC 215. The command processor 235 and the at least one monitor processor 235 are further described herein in relation to Fig. 3A.

In some implementations, each processor 235 includes a conflict detection and resolution module 240, a communication module 245, one or more data structures 250, and/or an FPM module 255, which may include a mission update module 260 and/or a behavior management module 265. For example, as shown in Fig. 2B, the processor 235-1, of the MMSC 215-1, includes a conflict detection and resolution module 240-1, a communication module 245-1, one or more data structures 250-1, and an FPM module 255-1 that includes a mission update module 260-1 and a behavior management module 265-1; and the processor 235-M, of the MMSC 215-1, includes a conflict detection and resolution module 240-*M*, a communication module 245-M, one or more data structures 250-M, and an FPM module 255-*M* that includes a mission update module 260-*M* and a behavior management update module 265-*M.* As further shown in Fig. 2B, each processor 235 may be connected (e.g., communicatively connected) to one or more comparison components 270 of the MMSC 215 and/or the one or more hardware components 205.

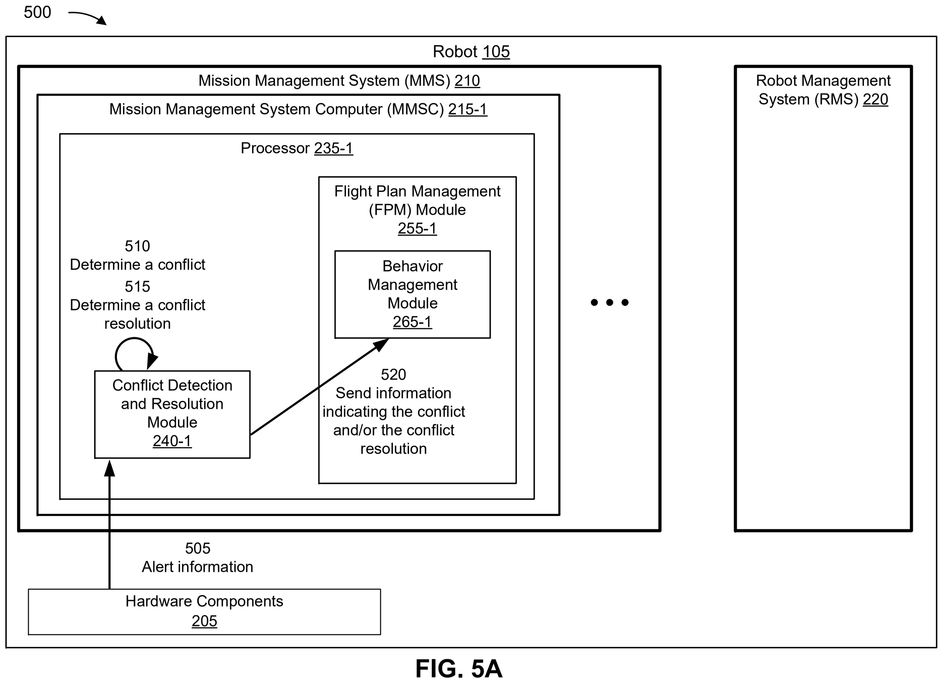

The conflict detection and resolution module 240 is configured to identify conflicts (e.g., potential collisions or other types of conflicts) associated with the robot 105 and to determine conflict resolutions (e.g., corrective actions that the robot 105 can take to avoid or mitigate the conflicts). For example, the conflict detection and resolution module 240 may be configured to obtain alert information from the one or more hardware components 205, such as from the radar system, the TAWS, the CAS, the transponder, the door sensor, the ice detection sensor, or the landing hazard avoidance system. The alert information may indicate, for example, a traffic advisory (TA), a resolution advisory (RA), a terrain warning, a sensor warning, or another type of alert information. Accordingly, the conflict detection and resolution module 240 may be configured to determine a conflict associated with the robot 105 and to thereby determine (e.g., based on the conflict) a conflict resolution. The conflict detection and resolution module 240 may be further configured to send information indicating the conflict and the conflict resolution to the behavior management module 265 of the FPM module 255, such as to enable the behavior management module 265 to determine a maneuver for the robot 105. Additional details are described herein in relation to Figs. 5A-5B.

The communication module 245 is configured to communicate with a robot, device, or system not included in the robot 105, such as the supervisor system 230. The communication module 245 may control, or may otherwise communicate with, the communication component of the one or more hardware components 205 to enable communication of information to and from the robot 105. For example, the communication module 245 may be configured to receive, from the supervisor system 230 (e.g., via the communication component), mission information (e.g., that indicates missions, or updates to the missions, of the robot 105) and send the mission information to the mission update module 260, as further described herein. As another example, the communication module 245 may be configured to communicate (e.g., via the communication component) information between one or more modules of the processor 235 and the supervisor system 230. In some implementations, the communication module 245 may be configured to communicate (e.g., via the communication component) information between the RMS 220 (e.g., at least one of the RMSCs 225) and the supervisor system 230. The communication module 245 (and the communication component of the one or more hardware components 205) may be configured with a dual-mode communication capability (e.g., a dual RF communication capability, a dual cellular connection capability, a dual satellite communication capability, along with other examples) to enable redundant communication with the supervisor system 230 (or another device or system not included in the robot 105). In this way, continuous and reliable communications to and from the robot 105 are provided even if one communication mode fails or is compromised.

In some implementations, the one or more data structures 250 include information relevant to performance of one or more operations (e.g., flight operations) of the robot 105. For example, the one or more data structures 250 may include a navigation data structure that includes navigation data (e.g., that is formatted according to Aeronautical Radio, Inc. (ARINC) standard 424) that identifies waypoints, airways, navigational aids, and/or airports; a ground hazard data structure that includes ground hazard data that identifies obstacles such as tall structures, towers, trees, power lines, and/or other environmental or man-made hazards on or near the ground of an environment (e.g., that are to be avoided by the robot 105); and/or a terrain data structure that includes terrain data that identifies a terrain (e.g., mountains, valleys, plains, and/or other landforms) of the environment (e.g., relative to which the robot 105 is to maintain a clearance). In some implementations, at least one of the modules of the processor 235 is configured to obtain information from the one or more data structures 250, as further described herein.

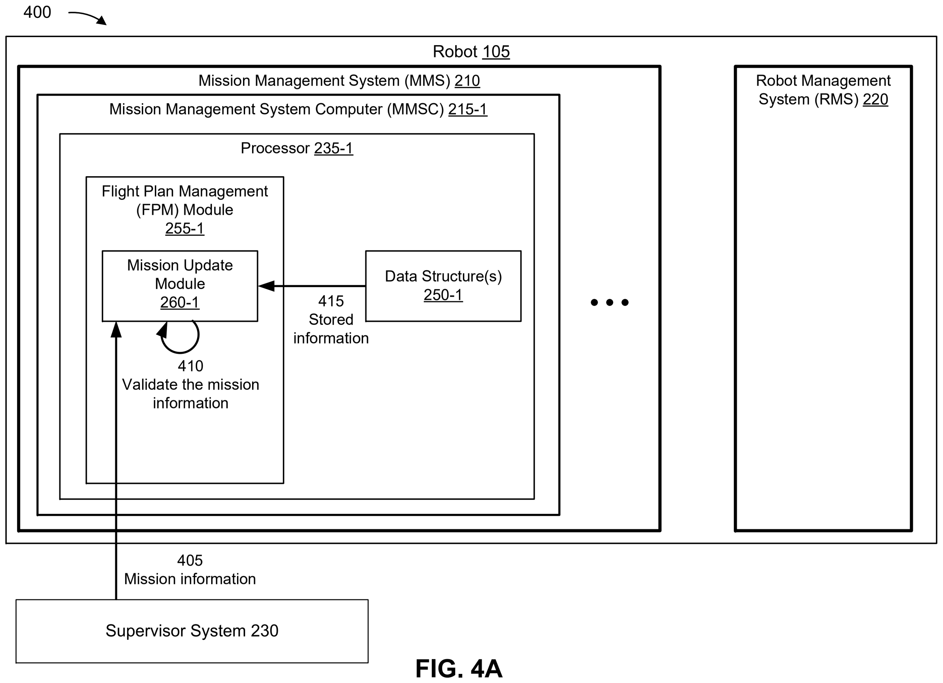

The FPM module 255 is configured to manage the execution of, and updates to, missions of the robot 105. Accordingly, the FPM module 255 includes the mission update module 260, which is configured to generate a nominal trajectory for the robot 105 (e.g., that indicates a pre-planned path, such as a pre-planned flight path, for the robot 105 operating during normal operating conditions) and one or more contingency trajectories for the robot 105 (e.g., that each indicate an alternative pre-planned path when unexpected events or emergencies occur that are associated with one or more missions of the robot 105). The mission update module 260 may generate the nominal trajectory and the one or more contingency trajectories based on mission information (e.g., that is provided by the supervisor system 230) and/or information obtained from the one or more data structures 250, as further described herein in relation to Figs. 4A-4B.

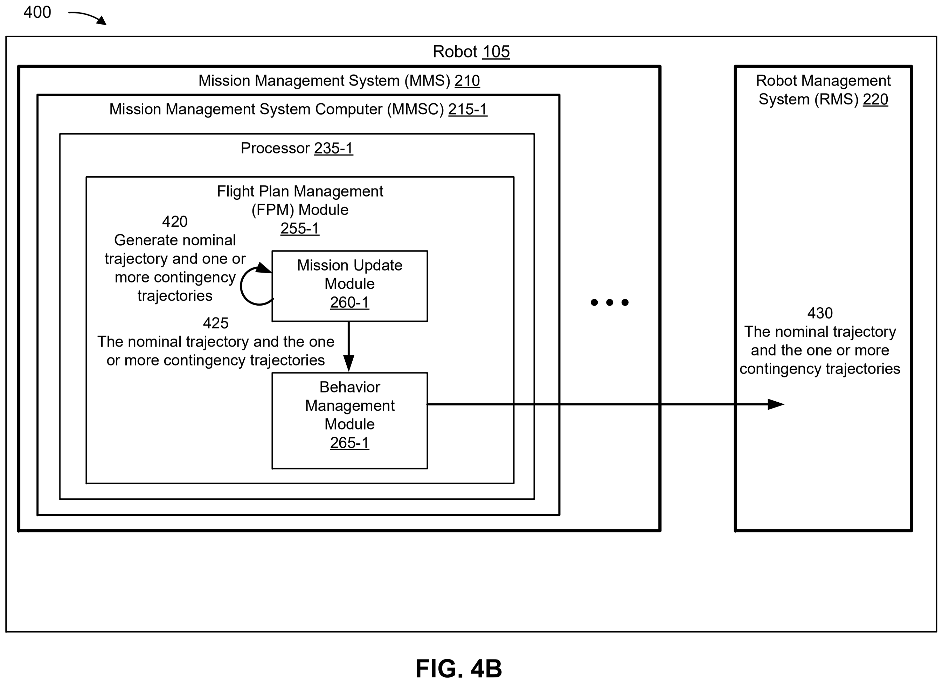

Further, the FPM module 255 includes the behavior management module 265, which is configured to control a behavior of the robot 105. The behavior management module 265 manages mission level decision making and mission flow for the robot 105. For example, the behavior management module 265 may obtain the nominal trajectory and the one or more contingency trajectories from the mission update module, and may send the nominal trajectory and the one or more contingency trajectories to the RMS 220 (e.g., to at least one of the RMSCs 225), as further described herein in relation to Fig. 4B. This enables the RMS 220 to execute a trajectory (from the nominal trajectory and the one or more contingency trajectories) for the robot 105. The behavior management module 265 may request the nominal trajectory and the one or more contingency trajectories based on validated mission information provided by the supervisor system 230, as further described herein in relation to Fig. 4A. As another example, as further described herein in relation to Figs. 5A-5B, the behavior management module 265 may receive (e.g., from the conflict detection and resolution module) information indicating a conflict associated with the robot 105 and a conflict resolution, and the behavior management module 265 may determine a maneuver for the robot 105 (e.g., to avoid the conflict, based on the conflict resolution and other status information related to the robot 105). The behavior management module 265 may then send the maneuver to the RMS 220 (e.g., to at least one of the RMSCs 225), which enables the RMS 220 to execute the maneuver for the robot 105 and therefore avoid the conflict.

The one or more comparison components 270 are configured to identify computational errors. For example, the one or more comparison components may include a programmable logic device (PLD), or another type of logic device, to identify cross-check errors between computational results generated by a plurality of processors 235 of an MMSC 215 or between computational results generated by a plurality of MMSCs 215, as further described herein in relation to Figs. 3A-3B.

As indicated above, Figs. 2A-2B are provided as an example. Other examples may differ from what is described with regard to Figs. 2A-2B. The number and arrangement of devices shown in Figs. 2A-2B are provided as an example. In practice, there may be additional devices, fewer devices, different devices, or differently arranged devices than those shown in Figs. 2A-2B. Furthermore, two or more devices shown in Figs. 2A-2B may be implemented within a single device, or a single device shown in Figs. 2A-2B may be implemented as multiple, distributed devices. Additionally, or alternatively, a set of devices (e.g., one or more devices) shown in Figs. 2A-2B may perform one or more functions described as being performed by another set of devices shown in Figs. 2A-2B.

Figs. 3A-3B are diagrams of an example implementation 300 associated with a mission management system architecture, such as with respect to detection of computation errors. As shown in Figs. 3A-3B, example implementation 300 includes the robot 105, which includes the MMS 210 and the RMS 220. The MMS 210 includes the plurality of MMSCs 215 (shown as MMSC 215-1through 215-*K*) that each comprise one or more comparison components 270.

As shown in Fig. 3A, the MMSC 215-1 includes a plurality of processors 235 (shown as processor 235-1 through processor 235-M), where the processor 235-1 is a command processor of the MMSC 215-1 and the processor 235-M is a monitor processor of the MMSC 215-1. That is, the processor 235-1 and the processor 235-M are each configured (e.g., in a same or similar manner) to generate respective computational results that can be cross-checked, such as to ensure computational integrity of the plurality of processors 235. The computational result of the processor 235-1, because the processor 235-1 is the command processor, is used by the MMS 210 and/or the RMS 220 (e.g., as elsewhere described herein) unless a mismatch is detected between respective computational results of the processor 235-1 and the processor 235-M, as further described below.

As shown by reference number 305, the processor 235-1, as the command processor, is configured to generate and send a first computational result to the one or more comparison components 270-1 of the MMSC 215-1. As shown by reference number 310, the processor 235-M is configured to generate and send a second computational result to the one or more comparison components 270-1 of the MMSC 215-1. Each of the processor 235-1 and the 235-M may use the same respective modules to generate the first computation result and the second computation result. For example, each processor 235 may use a mission update module 260 and/or a behavior management module 265 of the processor 235 to generate a computation result.

As shown by reference number 315, the one or more comparison components 270-1 are configured to compare the first computational result and the second computational result. For example, the one or more comparison components 270-1 may use a bit-wise comparison technique, or another comparison technique, to determine whether the first computational result matches (e.g., is equal to, or is the same as) the second computational result.

As shown by reference number 320, the one or more comparison components 270-1 are configured to send comparison error information to the RMS 220 (e.g., to at least one RMSC 225 of the RMS 220). The comparison error information may indicate that the first computational result matches the second computational result (and that therefore the first computational result is not likely to suffer from computational integrity issues). Alternatively, the comparison error information may indicate that the first computational result does not match the second computational result (and that therefore the first computational result likely suffers from computational integrity issues). The RMS 220 (e.g., using a contingency management functionality) may thereafter cease to use computational results generated by the processor 235-1 and/or the MMSC 215-1 to manage components of the robot 105. Additionally, the MMSC 215-1 may cease operating or may enter into a suspended operation mode.

As shown in Fig. 3B, an MMSC 215-1 is a primary MMSC of the MMS 210 and an MMSC 215-K is a standby MMSC of the MMS 210. That is, the MMSC 215-1 and the MMSC 215-K are each configured in a same or similar manner and are configured to generate respective computational results that can be cross-checked, such as to ensure computational integrity of the plurality of MMSCs 215. The MMSC 215-1 includes a processor 235-1-1 that is a command processor of the MMSC 215-1, and the MMSC 215-K includes a processor 235-1-K that is a command processor of the MMSC 215-K. A computational result of the MMSC 215-1 (using the processor 235-1-1), because the MMSC 215-1 is the primary MMSC, is used by the MMS 210 and/or the RMS 220 (e.g., as elsewhere described herein) unless a mismatch is detected between respective computational results of the MMSC 215-1 and the MMSC 215-K (that uses the processor *235-1-K),* as further described below.

As shown by reference number 325, the MMSC 215-1 (e.g., using the processor 235-1-1), as the primary MMSC, is configured to generate and send a first computational result to the one or more comparison components 270-*K* of the MMSC 215-K. As shown by reference number 330, the MMSC 215-K (e.g., using the processor 235-1-*K*) is configured to generate and send a second computational result to the one or more comparison components 270-K of the MMSC 215-K. The respective command processors of the MMSC 215-1 and the MMSC 215-K may use the same modules to generate the first computational result and the second computational result, such as in a similar manner as that described elsewhere herein in relation to Fig. 3A.

As shown by reference number 335, the one or more comparison components 270-K are configured to compare the first computational result and the second computational result. For example, the one or more comparison components 270-1 may use a bit-wise comparison technique, or another comparison technique, to determine whether the first computational result matches (e.g., is equal to, or is the same as) the second computational result.

As shown by reference number 340, the one or more comparison components 270-K are configured to send comparison error information to the RMS 220 (e.g., to at least one RMSC 225). The comparison error information may indicate that the first computational result matches the second computational result (and that therefore the first computational result is not likely to suffer from computational integrity issues). Alternatively, the comparison error information may indicate that the first computational result does not match the second computational result (and that therefore the first computational result likely suffers from computational integrity issues). The RMS 220 (e.g., using a contingency management functionality) may thereafter cease to use computational results generated by the MMSC 215-1 to manage components of the robot 105. Additionally, the MMSC 215-1 may cease operating or may enter into a suspended operation mode.

As indicated above, Figs. 3A-3B are provided as an example. Other examples may differ from what is described with regard to Figs. 3A-3B.

Figs. 4A-4B are diagrams of an example implementation 400 associated with a mission management system architecture, such as with respect to generating and executing trajectories. As shown in Figs. 4A-4B, example implementation 400 includes the robot 105, which includes the MMS 210 and the RMS 220, and the supervisor system 230. The MMS 210 includes the plurality of MMSCs 215, which respectively include a plurality of processors 235. The MMSC 215-1 is the primary MMSC and the processor 235-1 is the command processor of the MMSC 215-1. The processor 235-1 includes the FPM module 255-1, which includes the mission update module 260-1 and the behavior management module 265-1, and the one or more data structures 250-1.

As shown in Fig. 4A, and by reference number 405, the mission update module 260-1 is configured to obtain mission information, such as from the supervisor system 230. For example, the supervisor system 230 may transmit (e.g., wirelessly transmit) the mission information and the mission update module 260-1 may receive (e.g., via the communication module 245-1 of the processor 235-1 and a communication component of the one or more hardware components 205) the mission information. The mission information may indicate missions, or updates to the missions, of the robot 105. The mission update module 260-1 may obtain the mission operation prior to performance of the missions by the robot 105 (e.g., prior to a performance of a takeoff operation), or during performance of the missions by the robot 105 (e.g., during performance of in-flight operations).

As shown by reference number 410, the mission update module 260-1 is configured to validate the mission information. For example, the mission update module 260-1 may use one or more validation techniques (e.g., that check parameters associated with route safety, continuity, required energy, feasibility of trajectories generation, and/or other information associated with the missions indicated by the mission information) to validate the mission information.

As shown by reference number 415, the mission update module 260-1 obtains stored information, such as from the one or more data structures 250-1. The stored information may include, for example, at least some of the navigation data, the ground hazard data, or the terrain data stored by the one or more data structures 250-1 (e.g., as described herein in relation to Fig. 2B).

As shown in Fig. 4B and by reference number 420, the mission update module 260-1 is configured to generate a nominal trajectory for the robot 105 (e.g., that indicates a pre-planned path, such as a pre-planned flight path, for the robot 105 that is associated with one or more missions and for when the robot 105 operates during normal operating conditions) and one or more contingency trajectories for the robot 105 (e.g., that each indicate an alternative pre-planned path associated with the one or more missions and for when unexpected events or emergencies occur). The mission update module 260-1 may generate the nominal trajectory and the one or more contingency trajectories based on at least some of the validated mission information and/or the stored information obtained from the one or more data structures 250-1.

As shown by reference number 425, the behavior management module 265-1 is configured to obtain the nominal trajectory and the one or more contingency trajectories, such as from the mission update module 260-1. The mission update module 260-1 may send the nominal trajectory and the one or more contingency trajectories as the mission update module 260-1 generates the trajectories (e.g., in real-time or near real-time), or may send the nominal trajectory and the one or more contingency trajectories to the behavior management module 265-1 on a scheduled basis, on an on-demand basis, on a triggered basis, or on an ad-hoc basis.

As shown by reference number 430, the behavior management update module 265-1 is configured to send the nominal trajectory and the one or more contingency trajectories to the RMS 220 (e.g., as the behavior management update module 265-1 receives the trajectories, or on a scheduled basis, on an on-demand basis, on a triggered basis, or on an ad-hoc basis). This enables the RMS 220 (e.g., at least one RMSC 225) to execute a trajectory (from the nominal trajectory and the one or more contingency trajectories) for the robot 105. For example, the RMS 220 (e.g., using a contingency management functionality) may execute the nominal trajectory when the robot 105 operates during normal or expected conditions. In some implementations, the RMS 220 may execute a particular contingency trajectory, of the one or more contingency trajectories, when the robot 105 encounters unexpected events or emergencies. In this way, when an unexpected event or emergency occurs, the RMS 220 does not need to request the MMS 210 for a contingency trajectory and therefore a time to execute or to commence executing a contingency trajectory is reduced, which can improve an operational performance of the robot 105 (e.g., with respect to a time-sensitive unexpected event or emergency) and may prevent damage or other harm to the robot 105.

As indicated above, Figs. 4A-4B are provided as an example. Other examples may differ from what is described with regard to Figs. 4A-4B.

Figs. 5A-5B are diagrams of an example implementation 500 associated with a mission management system architecture, such as with respect to generating and executing maneuvers. As shown in Figs. 5A-5B, example implementation 500 includes the robot 105, which includes the one or more hardware components 205, the MMS 210, and the RMS 220. The MMS 210 includes the plurality of MMSCs 215, which respectively include a plurality of processors 235. The MMSC 215-1 is the primary MMSC and the processor 235-1 is the command processor of the MMSC 215-1. The processor 235-1 includes the conflict detection and resolution module 240-1 and the FPM module 255-1, which includes the behavior management module 265-1.

As shown in Fig. 5A, and by reference number 505, the conflict detection and resolution module 240-1 is configured to obtain alert information, such as from the one or more hardware components 205. For example, the conflict detection and resolution module 240-1 is configured to obtain alert information from the radar system, the TAWS, the CAS, the transponder, the door sensor, the ice detection sensor, or the landing hazard avoidance system. The alert information may indicate, for example, a TA, an RA, a terrain warning, a sensor warning (e.g., related to a door of the robot 105 being open, ice formation on the robot 105, or another type of sensor warning), or another type of alert information.

As shown by reference number 510, the conflict detection and resolution module 240-1 is configured to determine a conflict associated with the robot 105. For example, the conflict detection and resolution module 240-1 may use one or more analysis techniques on the alert information to determine the conflict. The conflict may be, for example, a potential collision of the robot 105 (e.g., with terrain, another robot or vehicle, or another hazard), an undesired operation of the robot 105 (e.g., due to an unsecured door of the robot 105, ice buildup on components of the robot 105, or other issues), or another type of conflict.

As shown by reference number 515, the conflict detection and resolution module 240-1 is configured to determine a conflict resolution. For example, the conflict detection and resolution module 240-1 may use one or more analysis techniques on the conflict to determine the conflict resolution. The conflict resolution may indicate, for example, a corrective action that the robot 105 can take to avoid or mitigate the conflict.

As shown by reference number 520, the behavior management module 265-1 is configured to obtain information indicating the conflict and/or the conflict resolution, such as from the conflict detection and resolution module 240-1. The conflict detection and resolution module 240-1 may send the information as the conflict detection and resolution module 240-1 determines the conflict and/or the conflict resolution (e.g., in real-time or near real-time), or may send the information on a scheduled basis, on an on-demand basis, on a triggered basis, or on an ad-hoc basis.

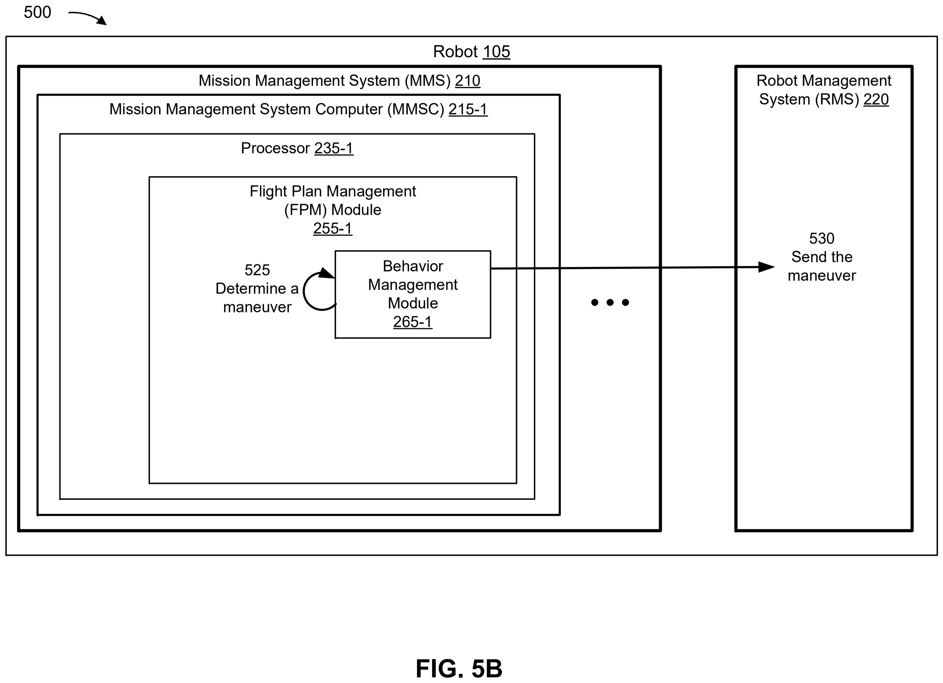

As shown in Fig. 5B, and by reference number 525, the behavior management module 265-1 is configured to determine a maneuver. For example, the conflict detection and resolution module 240-1 may use one or more analysis techniques on the information indicating the conflict and/or the conflict resolution to determine the maneuver. The maneuver may include, for example, a change to a path (e.g., a flight path), a speed, an orientation, or another characteristic or parameter of the robot 105. In some implementations, the behavior management module 265-1 may process the information indicating the conflict and/or the conflict resolution and other information associated with the robot 105 (e.g., obtained by other sensors of the robot 105 or the one or more hardware components 205), which may indicate a phase of flight of the robot 105 (e.g., whether the robot 105 is in a cruise, climb, descent, approach, or landing phase), a zone of operation of the robot 105 (e.g., that may indicate whether the conflict will result in a Well Clear violation), whether a detect and avoid (DAA) system of the robot 105 is enable or disabled, and/or current procedures in execution of the robot 105), along with other examples, to determine the maneuver.

As shown by reference number 530, the behavior management update module 265-1 is configured to send the maneuver to the RMS 220. This enables the RMS 220 (e.g., at least one RMSC 225) to execute the maneuver for the robot 105. For example, the RMS 220 (e.g., using a contingency management functionality) may execute the maneuver (e.g., in association with, or instead of, a particular trajectory of the nominal trajectory of the one or more contingency trajectories). In this way, the RMS 220 causes the robot 105 to make a controlled adjustment (e.g., a controlled flight adjustment), such as to enable optimization of navigation, avoidance of hazards, improved safety, and/or response to operational needs of the robot 105.

As indicated above, Figs. 5A-5B are provided as an example. Other examples may differ from what is described with regard to Figs. 5A-5B.

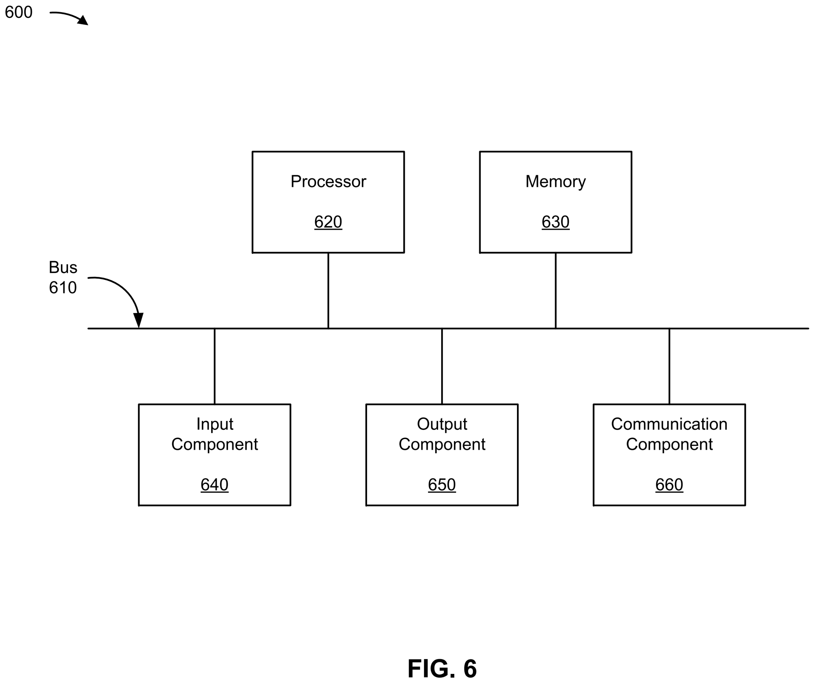

Fig. 6 is a diagram of example components of a device 600 associated with a mission management system architecture. The device 600 corresponds to one or more of the robot 105, the one or more hardware components 205, the MMS 210, the plurality of MMSCs 215, the RMS 220, the plurality of RMSCs 225, the supervisor system 230, and/or the one or more comparison components 270. In some implementations, the robot 105, the one or more hardware components 205, the MMS 210, the plurality of MMSCs 215, the RMS 220, the plurality of RMSCs 225, the supervisor system 230, and/or the one or more comparison components 270 include one or more devices 600 and/or one or more components of the device 600. In the example shown in Fig. 6, the device 600 includes a bus 610, a processor 620, a memory 630, an input component 640, an output component 650, and/or a communication component 660.

The bus 610 includes one or more components that enable wired and/or wireless communication among the components of the device 600. The bus 610 couples together two or more components of Fig. 6, such as via operative coupling, communicative coupling, electronic coupling, and/or electric coupling. For example, the bus 610 may include an electrical connection (e.g., a wire, a trace, and/or a lead) and/or a wireless bus. The processor 620 includes a central processing unit, a graphics processing unit, a microprocessor, a controller, a microcontroller, a digital signal processor, a field-programmable gate array, an application-specific integrated circuit, and/or another type of processing component. The processor 620 may be implemented in hardware, firmware, or a combination of hardware and software. In some implementations, the processor 620 includes one or more processors capable of being programmed to perform one or more operations or processes described elsewhere herein.

The memory 630 includes volatile and/or nonvolatile memory, such as random access memory (RAM), read only memory (ROM), a hard disk drive, and/or another type of memory (e.g., a flash memory, a magnetic memory, and/or an optical memory). The memory 630 may include internal memory (e.g., RAM, ROM, or a hard disk drive) and/or removable memory (e.g., removable via a universal serial bus connection). In some implementations, the memory 630 is a non-transitory computer-readable medium. The memory 630 stores information, one or more instructions, and/or software (e.g., one or more software applications) related to the operation of the device 600. In some implementations, the memory 630 includes one or more memories that are coupled (e.g., communicatively coupled) to one or more processors (e.g., processor 620), such as via the bus 610. Communicative coupling between a processor 620 and a memory 630 enables the processor 620 to read and/or process information stored in the memory 630 and/or to store information in the memory 630.

The input component 640 enables the device 600 to receive input, such as user input and/or sensed input. For example, the input component 640 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 650 enables the device 600 to provide output, such as via a display, a speaker, and/or a light-emitting diode. The communication component 660 enables the device 600 to communicate with other devices via a wired connection and/or a wireless connection. For example, the communication component 660 may include a receiver, a transmitter, a transceiver, a modem, a network interface card, and/or an antenna.

In some implementations, the device 600 performs one or more operations or processes described herein. For example, a non-transitory computer-readable medium (e.g., memory 630) may store a set of instructions (e.g., one or more instructions or code) for execution by the processor 620. The processor 620 may execute the set of instructions to perform one or more operations or processes described herein. In some implementations, execution of the set of instructions, by one or more processors 620, causes the one or more processors 620 and/or the device 600 to perform one or more operations or processes described herein. In some implementations, hardwired circuitry is used instead of or in combination with the instructions to perform one or more operations or processes described herein. Additionally, or alternatively, the processor 620 may be configured to perform one or more operations or processes described herein. Thus, implementations described herein are not limited to any specific combination of hardware circuitry and software.

The number and arrangement of components shown in Fig. 6 are provided as an example. The device 600 may include additional components, fewer components, different components, or differently arranged components than those shown in Fig. 6. Additionally, or alternatively, a set of components (e.g., one or more components) of the device 600 may perform one or more functions described as being performed by another set of components of the device 600.

There are also provided robots according to the following clauses
Clause 1. A robot comprising:
   a mission management system (MMS) that includes a management system computers (MMSC) that includes:
   a plurality of processors, wherein each processor includes:
   a flight plan management (FPM) module that includes a mission update module and a behavior management module, wherein:
   the mission update module is configured to generate a nominal trajectory and one or more contingency trajectories for the robot; and
   the behavior management module is configured to control a behavior of the robot.
Clause 2. The robot of clause 1, wherein the behavior management module is further configured to: obtain the nominal trajectory and the one or more contingency trajectories from the mission update module; and send the nominal trajectory and the one or more contingency trajectories to a robot management system of the robot.
Clause 3. The robot of clause 1 or 2, wherein the robot further comprises a robot management system (220) that is configured to execute maneuvers, and wherein the behavior management module is further configured to send information indicating a maneuver to the robot management system to cause the robot management system to execute the maneuver.
Clause 4. The robot of any of clauses 1 to 3, wherein the mission management system computers (215) is one of a primary mission management system computer (215) or a standby mission management system computer (215).
Clause A1. A robot comprising:
   a mission management system (MMS) that includes a management system computer (MMSC) that includes:
   a plurality of processors, wherein each processor includes:
   a flight plan management (FPM) module that includes a mission update module and a behavior management module, wherein:
   the mission update module is configured to generate a nominal trajectory and one or more contingency trajectories for the robot; and
   the behavior management module is configured to control a behavior of the robot.
Clause A2. The robot of clause A1, wherein the behavior management module is further configured to: obtain the nominal trajectory and the one or more contingency trajectories from the mission update module; and send the nominal trajectory and the one or more contingency trajectories to a robot management system of the robot.
Clause A3. The robot of clause A1 or A2, wherein the robot further comprises a robot management system (220) that is configured to execute maneuvers, and wherein the behavior management module is further configured to send information indicating a maneuver to the robot management system to cause the robot management system to execute the maneuver.
Clause A4. The robot of any of clauses A1 to A3, wherein the mission management system computer (215) is one of a primary mission management system computer (215) or a standby mission management system computer (215).
Clause B1. A robot comprising:
   a mission management system (MMS) that includes a plurality of management system computers (MMSC), wherein each management system computer that includes:
   a plurality of processors, wherein each processor includes:
   a flight plan management (FPM) module that includes a mission update module and a behavior management module, wherein:
   the mission update module is configured to generate a nominal trajectory and one or more contingency trajectories for the robot; and
   the behavior management module is configured to control a behavior of the robot.
Clause B2. The robot of clause B1, wherein the behavior management module is further configured to: obtain the nominal trajectory and the one or more contingency trajectories from the mission update module; and send the nominal trajectory and the one or more contingency trajectories to a robot management system of the robot.
Clause B3. The robot of clause B1 or B2, wherein the robot further comprises a robot management system (220) that is configured to execute maneuvers, and wherein the behavior management module is further configured to send information indicating a maneuver to the robot management system to cause the robot management system to execute the maneuver.
Clause B4. The robot of any of clauses B1 to B3, wherein the plurality of mission management system computers (215) comprise a primary mission management system computer (215) and a standby mission management system computer (215).

The foregoing disclosure provides illustration and description, but is not intended to be exhaustive or to limit the implementations described herein to the precise forms that are described. Modifications and variations can be made in light of the above description or may be acquired from practice of the implementations described herein.

As used herein, the terms "component" and "module" are each intended to be broadly construed as hardware, firmware, and/or a combination of hardware and software. It will be apparent that systems and/or methods described herein can be implemented in different forms of hardware, firmware, or a combination of hardware and software. The actual specialized control hardware or software code used to implement these systems and/or methods is not limiting of the implementations described herein. Thus, the operation and behavior of the systems and/or methods are described herein without reference to specific software code-it being understood that software and hardware can be designed to implement the systems and/or methods based on the description herein.

Even though particular combinations of features are recited in the claims and/or described in the specification, these combinations are not intended to limit the implementations described herein. In fact, many of these features can be combined in ways not specifically recited in the claims and/or described in the specification. For example, the description includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a component" or "one or more components" (or another element, such as "a processor" or "one or more processors") is described or claimed (within a single claim or across multiple claims) as performing multiple operations or being configured to perform multiple operations, this language is intended to broadly cover a variety of architectures and environments. For example, unless explicitly claimed otherwise (e.g., via the use of "first component" and "second component" or other language that differentiates components in the claims), this language is intended to cover a single component performing or being configured to perform all of the operations, a group of components collectively performing or being configured to perform all of the operations, a first component performing or being configured to perform a first operation and a second component performing or being configured to perform a second operation, or any combination of components performing or being configured to perform the operations. For example, when a claim has the form "one or more components configured to: perform X; perform Y; and perform Z," that claim should be interpreted to mean "one or more components configured to perform X; one or more (possibly different) components configured to perform Y; and one or more (also possibly different) components configured to perform Z."

No element, act, or instruction used herein should be construed as critical or essential unless explicitly described as such. Also, as used herein, the articles "a" and "an" are intended to include one or more items, and can be used interchangeably with "one or more." Further, as used herein, the article "the" is intended to include one or more items referenced in connection with the article "the" and can be used interchangeably with "the one or more." Furthermore, as used herein, the term "set" is intended to include one or more items (e.g., related items, unrelated items, or a combination of related and unrelated items,), and can be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and can be used interchangeably with "and/or," unless explicitly stated otherwise (e.g., if used in combination with "either" or "only one of").

## Claims

1. A mission management system (MMS) (210) of a robot (105), comprising:
a plurality of mission management system computers (MMSCs) (215), wherein each mission management system computer (215) includes:
a plurality of processors (235), wherein each processor (235) includes:
a conflict detection and resolution module (240) that is configured to identify conflicts associated with the robot (105) and to determine conflict resolutions;
a communication module (245) that is configured to communicate with a supervisor system (230) not included in the robot (105); and
a flight plan management (FPM) module (255) that includes a mission update module (260) and a behavior management module (265), wherein:
the mission update module (260) is configured to generate a nominal trajectory and one or more contingency trajectories for the robot (105); and
the behavior management module (265) is configured to control a behavior of the robot (105).

2. The mission management system (210) of claim 1, wherein the plurality of mission management system computers (215) includes a primary mission management system computer (215) and a standby mission management system computer (215) arranged in an operational dual-duplex configuration.

3. The mission management system (210) of claim 1 or 2, wherein the plurality of processors (235) include a first processor (235) configured to generate a first set of computational results and a second processor (235) configured to generate a second set of computational results.

4. The mission management system (210) of any preceding claim, wherein each mission management system computer (215), of the plurality of mission management system computers (215) of the mission management system (210), further includes at least one comparison module (270) configured to:
compare a first computational result generated by a first processor (235), of the plurality of processors (235) of the mission management system computer (215), and a second computational result generated by a second processor (235) of the plurality of processors (235); and/or
compare the first computational result generated by the first processor (235) and a third computational result generated by a third processor (235) of another mission management system computer (215) of the plurality of mission management system computers (215) of the mission management system (210).

5. The mission management system (210) of any preceding claim, wherein the behavior management module (265) is further configured to:
obtain the nominal trajectory and the one or more contingency trajectories from the mission update module (260); and
send the nominal trajectory and the one or more contingency trajectories to a robot (105) management system of the robot (105).

6. The mission management system (210) of any preceding claim, wherein the mission management system computer (215) is configured to communicatively connect to at least one of:
a radar system of the robot (105);
a terrain awareness warning system of the robot (105);
a collision avoidance system of the robot (105);
a transponder of the robot (105);
a door sensor of the robot (105);
an ice detection sensor of the robot (105);
a data logger of the robot (105);
a communication module (245) of the robot (105);
a maintenance or diagnostic device of the robot (105); or
a landing hazard avoidance system of the robot (105).

7. The mission management system (210) of any preceding claim, wherein the communication module (245) is further configured with a dual satellite communication capability to enable communication with the supervisor system (230).

8. The mission management system (210) of any preceding claim, wherein the conflict detection and resolution module (240) is further configured to:
obtain alert information;
determine, based on the alert information, a conflict associated with the robot (105);
determine, based on the conflict, a conflict resolution; and
send, to the behavior management module (265), information indicating the conflict and the conflict resolution.

9. The mission management system (210) of any preceding claim, wherein the behavior management module (265) is further configured to:
receive, from the conflict detection and resolution module (240), information indicating a conflict associated with the robot (105) and a conflict resolution;
determine, based on the information, a maneuver; and
send information indicating the maneuver to a robot (105) management system of the robot (105).

10. The mission management system (210) of any preceding claim, wherein the mission update module (260) is further configured to:
obtain, from the supervisor system (230) via the communication module (245), mission information;
validate the mission information; and
generate the nominal trajectory and the one or more contingency trajectories based on at least some of the validated mission information.

11. The mission management system (210) of any preceding claim, wherein each processor (235) further includes one or more data structures (250) that respectively include navigation data, ground hazard data, or terrain data, and
wherein the mission update module (260), to generate the nominal trajectory and the one or more contingency trajectories, is further configured to:
generate the nominal trajectory and the one or more contingency trajectories based on information obtained from the one or more data structures (250).

12. A method, comprising:
generating, by a mission management system (MMS) (210) of a robot (105), a nominal trajectory and one or more contingency trajectories for the robot (105);
sending, by the mission management system (210), the nominal trajectory and the one or more contingency trajectories to a robot (105) management system of the robot (105).

13. The method of claim 12, further comprising:
determining, based on alert information, a conflict associated with the robot (105);
determining, based on the conflict, a conflict resolution; and
determining, based on the conflict and the conflict resolution, a maneuver; and
sending information indicating the maneuver to a robot management system (225) of the robot (105).

14. The method of claim 12 or 13, wherein generating the nominal trajectory and the one or more contingency trajectories comprises one or more of:
validating mission information; and generating the nominal trajectory and the one or more contingency trajectories based on at least some of the validated mission information;
obtaining information one or more data structures (250) that respectively include navigation data, ground hazard data, or terrain data; and generating the nominal trajectory and the one or more contingency trajectories based on the information; and
obtaining a first computational result generated by the mission management system (210) and a second computational result generated by the mission management system (210); comparing the first computational result and the second computational result; and sending comparison error information indicating whether the first computational result matches the second computational result to a robot management system (225) of the robot (105).

15. A robot (105), comprising:
the mission management system (MMS) (210) of any preceding claim wherein, optionally, the robot (105) further comprises a robot management system (220) that is configured to execute maneuvers, and wherein the behavior management module (265) is further configured to send information indicating a maneuver to the robot (105) management system to cause the robot (105) management system to execute the maneuver, and/or the mission management system computers (215) is one of a primary mission management system computer (215) or a standby mission management system computer (215).
